# EUROPÄISCHE PATENTANMELDUNG

(11) **EP 2 177 890 A2**
(43) Veröffentlichungstag der Anmeldung: **21.04.2010**
(21) Anmeldenummer: 09400050.2
(22) Anmeldetag: 16.10.2009
(51) Int. Cl.: G01M 11/08

(54) **Lamelle zur Ertüchtigung und Überwachung von Tragwerken sowie Verfahren zu deren Herstellung und Anwendung.**

(30) Priorität: 18.10.2008 DE 102008052807
(71) Anmelder: Sächsisches Textilforschungsinstitut e.V., 09125 Chemnitz (DE)
(72) Erfinder: Thiele, Elke, 09125 Chemnitz (DE); Arnold, Rolf, 01257 Dresden (DE); Weigand, Frank, 09119 Chemnitz (DE); Berthel, Andreas, 08118 Hartenstein (DE); Schaller, Maria-Barbara, 04651 Bad Lausick (DE); Holschemacher, Klaus, 04425 Taucha (DE); Kuhne, Michael, 99423 Weimer (DE)

(57) **Zusammenfassung**

Die Erfindung betrifft eine Lamelle aus Hochleistungsfasern, deren Herstellung und Verwendung insbesondere zur Verstärkung und Überwachung von Beton- oder Holztragwerken, die neben der klassischen Dachtragwerkertüchtigung auch ein Monitoring (Überwachung) ermöglicht.

Die Anordnung der optischen Faser auf der Lamelle erfolgt erfindungsgemäß so, dass Anfang und Ende nach freier Führung zur belastungsgerechten Anordnung der optischen Faser auf der Fläche direkt nebeneinander fixiert werden. Die optische Faser wird hierfür auf die Lamelle gestickt. Durch die Art der Steckerpositionierung können mit ein und demselben Messgerät, auch im Falle eines Faserbruches, Messsignale über das jeweils intakte Anschlussstück gewonnen werden.

## Beschreibung

Die Erfindung betrifft eine Lamelle aus Hochleistungsfasern, deren Herstellung und Verwendung insbesondere zur Verstärkung und Überwachung von Beton- oder Holztragwerken, die neben der klassischen Dachtragwerkertüchtigung auch ein Monitoring (Überwachung) ermöglicht.

### Stand der Technik

Die Messung mechanischer Verformungen im Tunnel-, Brücken- und Gebäudebau erfolgt zunehmend mittels faseroptischer Sensoren auf der Basis von Faser-Bragg-Gittern (FBG). Bisher werden hier diese Faserstrecken kraftschlüssig mit dem umgebenden Material verbunden und die Auswirkung von Verformungen auf die Reflexionscharakteristik der FBG bestimmt. FBG sind eingeschriebene Brechzahlerhöhungen im Kern der Faser in Form einer Gitterstruktur. Die Gitter werden genutzt, um Licht innerhalb einer Faser zu reflektieren, zu filtern oder zu verändern. Der Einsatz von FBG ermöglicht es, eine Faser als Sensor für ortsverteilte Belastungs- und Temperaturmessungen zu verwenden.
Stand der Technik bezüglich Dachtragwerksanierungen ist der Einsatz von Carbonfaserverbundwerkstoffen in Lamellenform (CFK-Lamellen). CFK-Lamellen zeichnen sich durch sehr hohe Zugfestigkeit und Steifigkeit aus. Geringes Gewicht, hohe Resistenz gegen Korrosion und gute Dauerfestigkeit sind weitere Vorteile von CFK-Lamellen. Eine gleichzeitige Überwachungsfunktion ist mit diesen Lamellen nicht möglich.
In *Meier, U. "Carbon fibers in architecture and in bridge engineeting",' Vortrag Band 45. Manmade Fibers Congress, Dombim 2006* ist ein stabförmiger Carbon-Faserverbund zur Brückensanierung beschrieben, der mit optischen Fasern in gestreckter Anordnung im Kern des Stabes ausgerüstet wird. Eine flächige Verstärkung ist mit diesem Material nicht möglich.
Bei Faserbruch der optischen Sensorfaser ist die Überwachungsfunktion des Systems nicht mehr gegeben. Eine sichere Bauwerksüberwachung ist mit diesem System nicht möglich, da die mechanisch gewonnenen Messwerte durch Temperatureinflüsse verfälscht werden und durch die beschriebene Faseranordnung eine Temperaturkompensation nicht möglich ist.

Die Aufgabe der Erfindung besteht deshalb darin, eine textile Bewehrung, textilbewehrte Bauelemente bzw. Verstärkungsschichten für Bauelemente zu schaffen, bei dem die textile Bewehrungsstruktur entsprechend der geforderten Form und Funktion einer CFK-Lamelle tragende Elemente aufweist und zusätzlich zu den lastaufnehmenden Elementen mit sensorischen Elementen versehen ist, die nicht durch Temperatureinflüsse verfälscht werden

### Lösung

Gelöst wird die Aufgabe durch die im Anspruch 1, 8 und 11 beschriebenen Merkmale. Vorteilhafte Weiterbildungen sind in den Unteransprüchen beschrieben.

Die Lamelle wird zur Armierung von Tragwerken und deren Zustandsüberwachung sowie für die Gefahrenerkennung im Versagensfall so konstruiert, dass diese aus einem textilen Flächengebilde und integrierten faseroptischen Sensoren besteht, wobei die faseroptischen Sensoren auf Lastaufnahmestrukturen gestickt oder direkt im Textilherstellungsprozess gemeinsam mit den Lastaufnahmefäden in die Fläche integriert sind und diese zur kontinuierlich quasi verteilten Messung physikalischer Größen dienen (Temperatur, Dehnung, Stauchung, Schwingung) und das dabei verwendete Messverfahren auf Nutzung der Spektralanalyse von an Faser Bragg Gittern (FBG) rückreflektierten Lichtwellen beruht.

### Vorteile der Lösung

Mit dem erfindungsgemäßen textilen Monitoringsystem können kritische Veränderungen an Bauwerken z. B. in Folge von Alterung oder äußerer Einflüsse, wie extreme Belastungen durch Schnee- und Windlasten oder Erdbeben, zuverlässig und frühzeitig festgestellt werden.
Eine signifikante Erhöhung der Bauwerksicherheit wird mit der vorliegenden Erfindung erreicht. Die erforderliche Bewehrungsfunktion wird realisiert und gleichzeitig der tatsächliche bauliche Zustand des Tragwerkes unter verschiedenen Belastungszuständen erfasst. Dabei werden gleichzeitig durch entsprechende Sensorfaserführung in der Fläche die Temperatureinflüsse auf das durch Dehnung der optischen Faser gewonnene Messsignal kompensiert. Durch die Integration von Bewehrungs- und Mess- bzw. Monitoringfunktionen in einer Struktur ist eine schnelle und sichere Anwendung bei Bausanierungen gegeben,

Die erfindungsgemäße Lamelle eignet sich besonders zum Einsatz bei:
- kritischen Durchbiegungen von Tragwerkelementen (*Holzelemente*, Betonelemente)
- kritischen Rissbildungen (Betonelemente)
- Nachweis der Funktionsfähigkeit, Zuverlässigkeit und Sicherheit von Bauwerken nach Sanierungsmaßnahmen, insbesondere von Bauwerken mit hohem Schadenspotential im Versagensfall,
- Nachweis der Restnutzungsdauer gealterter Objekte bzw. Nachweis der tatsächlichen Tragfähigkeit und Restnutzungszeit nach einer Sanierungsmaßnahme
- der Nutzungsänderung von Bauwerken zur Überwachung des Bauzustandes
- Anpassung von Baubeständen auf sich verändernde Umgebungsbedingungen wie steigende Wind- und Schneelasten
- Kontrollen von Erfolg und Wirkung von Sanierungsmaßnahmen

Mit diesen neuartigen Strukturen werden vorhandene Sicherheitslücken im Bereich der Bausanierung und Bauwerküberwachung geschlossen. So kann eine Basis für ein zuverlässiges Monitoring der Standsicherheit an Tragwerken geschaffen werden, ähnlich wie sie bei Brückenprüfungen nach DIN 1076 bereits eingeführt ist und von Gremien wie dem VDI-Gesellschaft Bautechnik gefordert wird.

### Ausführungsbeispiel

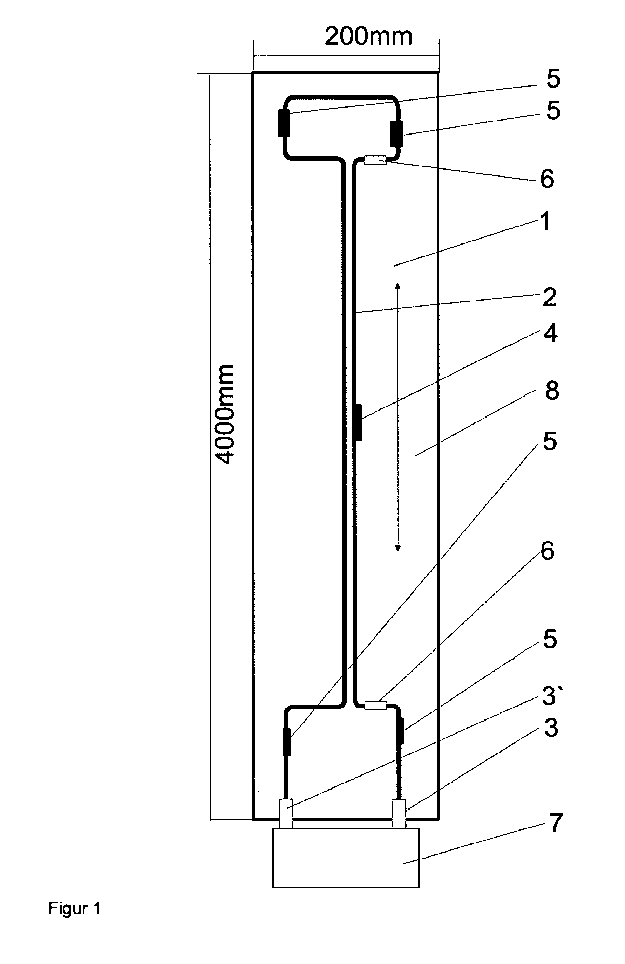

Das Ausführungsbeispiel ist in Figur 1 abgebildet. Hierbei wird, wie folgt, dargestellt:
1 Lamelle
2 optische Faser
3 Stecker
3' Stecker
4 Faser Bragg Gitter zur Erfassung von Zug-, Druckbeanspruchungen
5 Faser Bragg Gitter zur Erfassung von Scherbeanspruchungen
6 Faser Bragg Gitter zur Erfassung von Temperaturbeanspruchungen
7 Spektrometer
8 Kraftlinienverlauf

Die Anordnung der optischen Faser 2 auf einer Lamelle 1 erfolgt erfindungsgemäß so, dass Anfang 3 und Ende 3' nach freier Führung zur belastungsgerechten Anordnung der optischen Faser auf der Fläche direkt nebeneinander fixiert werden. Die optische Faser 2 wird hierfür auf die Lamelle 1 gestickt. Durch diese Art der Steckerpositionierung können mit ein und demselben Messgerät 7, auch im Falle eines Faserbruches, Messsignale über das jeweils intakte Anschlussstück 3 oder 3' gewonnen werden. Die Funktionssicherheit des Systems wird somit um 100 Prozent gesteigert.
Darüber hinaus erlaubt die sticktechnische Fixierung der optischen Faser 2 eine belastungsgerechte Anordnung der FBG 4, 5 und 6. Diese werden in den Hauptbelastungszonen zum Detektieren von Zug- Druckkräften 4 und Scherkräften 5 auf der Lamelle 1 positioniert. Die Kompensation des Temperatureinflusses auf die mechanischen Messwerte wird durch Anordnung weiterer FBG 6 erzielt. Dazu werden die FBG 6 senkrecht zum Verlauf der Kraftlinie 8 auf der Lamelle 1 gestickt.

## Patentansprüche

1. Lamelle zur Armierung von Tragwerken und deren Zustandsüberwachung sowie für die Gefahrenerkennung im Versagensfall aus hochzugfestem lastaufnehmendem textilem Material und mindestens einem applizierten faseroptischen Sensor mit integrierten Faser-Bragg-Gittern, **dadurch gekennzeichnet, dass** der faseroptische Sensor auf der Textilstruktur individuell so aufgestickt ist, dass er sowohl in Richtung der Kraftlinien zum Detektieren von Zug-, Druck- und Scherkräften als auch quer zu den Kraftlinien, spannungsfrei zur Temperaturkompensation verläuft.

2. Lamelle nach Anspruch 1 **dadurch gekennzeichnet, dass** das textile Trägermaterial aus gewebten, gewirkten, geflochtenen, gestrickten oder gelegten lastaufnehmenden Fäden aus hochzugfesten Fasern wie Glas, Karbon, Aramid und/oder Basalt besteht.

3. Lamelle nach Anspruch 1 und 2 **dadurch gekennzeichnet, dass** in der Textilsstruktur die optische Faser abwechselnd gestreckt und mäandrierend auf dem Trägertextil gestickt ist, wobei Anfang und Ende der optischen Faser unmittelbar nebeneinander auf der Textilfläche angeordnet sind.

4. Lamelle nach einem der Ansprüche 1 bis 3 **dadurch gekennzeichnet, dass** die auf die Textilstruktur gestickte optische Faser bereits vor der textilen Verarbeitung eingeschriebene Faser Bragg Gittern enthält.

5. Lamelle nach einem der Ansprüche 1 bis 3 **dadurch gekennzeichnet, dass** die auf die Textilstruktur gestickte optische Faser erst nach der textilen Verarbeitung die eingeschriebenen Faser Bragg Gitter erhalten hat.

6. Lamelle nach einem der Ansprüche 1 bis 5 **dadurch gekennzeichnet, dass** die Textilsstruktur mittels Harzsystem verfestigt ist und der Verbundwerkstoff aus einer oder mehreren Textillagen besteht, wobei in mindestens einer Lage eine optische Faser mit integrierten FBG fixiert ist.

7. Lamelle nach einem der Ansprüche 1 bis 6 **dadurch gekennzeichnet, dass** die optische Faser aus Glas oder Kunststoff besteht.

8. Herstellung einer Lamelle nach einem der Ansprüche 1 bis 7, **dadurch gekennzeichnet, dass** die optischen Fasern auf die Textilstrukturen durch das Soutage-Stickverfahren aufgestickt werden.

9. Herstellung einer Lamelle nach Anspruch 8 **dadurch gekennzeichnet, dass** das Einschreiben der optisch sensitiven Gitter (FBG) in den Faserkern an beliebiger Position in die optische Faser mittels eines Excimer-Lasers nach der sticktechnischen Fixierung der optischen Faser erfolgt.

10. Herstellung einer Lamelle nach Anspruch 8 **dadurch gekennzeichnet, dass** bei Einschreiben der optisch sensitiven Gitter (FBG) in den Faserkern gleichzeitig am Ort der Fasergitter die darunter befindliche Textilstruktur mittels Excimer-Laser so bearbeitet wird, dass im Falle einer Überbeanspruchung der Lastaufnahmestrukturen sich mindestens eine Sollbruchstelle in der Lamelle in unmittelbarer Nähe des FBG befindet.

11. Verwendung einer Lamelle nach einem der Ansprüche 1 bis 10 zur Bauwerksarmierung und gleichzeitigen Zustandsüberwachung sowie für die Gefahrenerkennung im Versagensfall **dadurch gekennzeichnet, dass** diese eingesetzt wird in Tragwerkskonstruktionen wie Dachtragwerke, Brückenkonstruktionen, Tunnelkonstruktionen.
